# EUROPÄISCHE PATENTANMELDUNG

(11) **EP 2 276 127 A2**
(43) Veröffentlichungstag der Anmeldung: **19.01.2011**
(21) Anmeldenummer: 10168444.7
(22) Anmeldetag: 05.07.2010
(51) Int. Cl.: H02B 1/38

(54) **Elektroschrank zur Aufnahme von Elektroinstallationsgeräten und Verbindungselement**

(30) Priorität: 17.07.2009 DE 102009033599
(71) Anmelder: Siemens Aktiengesellschaft, 80333 München (DE)
(72) Erfinder: Kandlbinder, Max, 93142, Maxhütte-Haidhof (DE); Kling, Andre, 95512, Neudrossenfeld (DE); Schmidt, Christian, 93346, Ihrlerstein (DE); Schmidt, Jan-Carsten, 93047, Regensburg (DE)

(57) **Zusammenfassung**

Der erfindungsgemäße Elektroschrank (1) ist zur Aufnahme von Elektroinstallationsgeräten ausgebildet und weist ein Gehäuse (2) auf, in dem die Elektroinstallationsgeräte befestigbar sind. Weiterhin weist der Elektroschrank (1) eine erste und eine zweite Türe (4, 5) auf, welche am Gehäuse (2) angeordnet und zur manuellen Betätigung vorgesehen sind. Ferner ist ein Verbindungselement (6) vorgesehen, welches zumindest an einer der Türen (4, 5) befestigt und derart ausgebildet ist, dass die erste Türe (4) und die zweite Türe (5) miteinander gekoppelt und gemeinsam betätigbar sind. Hierdurch wird einerseits die Bedienbarkeit beim Öffnen und Schließen der Türen (4, 5) erleichtert, zum anderen erlaubt eine derartige Gestaltung eine Reduktion der Variantenvielfalt, was zu einer deutlichen Verringerung der Produktions- und Logistikkosten führt.

## Beschreibung

### Beschreibung

Elektroschrank zur Aufnahme von Elektroinstallationsgeräten und Verbindungselement

Die Erfindung betrifft einen Elektroschrank zur Aufnahme von Elektroinstallationsgeräten, mit einem Gehäuse, in dem die Elektroinstallationsgeräte befestigbar sind, sowie einer ersten und einer zweiten Türe, welche zur manuellen Betätigung vorgesehen sind. Weiterhin betrifft die Erfindung ein Verbindungselement zum Koppeln mehrerer Türen eines Elektroschranks.

Die Erfindung geht somit von einem Gehäuse mit einer Mehrzahl von Türen aus, welche z.B. durch Verschwenken manuell geöffnet und geschlossen werden können. Im geöffneten Zustand einer Türe kann durch die Türöffnung hindurch auf den Innenraum des Gehäuses zugegriffen werden, beispielsweise um Schalthandlungen oder Betätigungen von Geräten durchführen zu können. Derartige Gehäuse sind beispielsweise aus der DE 10 2004 011 762 B3 bekannt und werden unter anderem von der Anmelderin in verschiedenen Größen und Ausstattungsvarianten als Kleinverteilergehäuse für die Elektroindustrie vertrieben. Dabei existieren je nach Land und Applikation unterschiedliche Anforderungen, was unterschiedliche Ausführungen und Gehäusebauformen erforderlich macht, welche sich oftmals auch hinsichtlich der Anzahl und Größe der Türen unterscheiden.

Es ist deshalb die Aufgabe der vorliegenden Erfindung, einen Elektroschrank bereitzustellen, der sich durch eine höhere Standardisierung und damit durch eine breitere Einsatzmöglichkeit in den verschiedenen Ländern auszeichnet. Ferner ist es die die Aufgabe der vorliegenden Erfindung, ein Verbindungselement zum Koppeln mehrerer Türen eines Elektroschranks bereitzustellen.

Diese Aufgabe wird durch den erfindungsgemäßen Elektroschrank sowie durch das erfindungsgemäße Verbindungselement gemäß den unabhängigen Ansprüchen gelöst. Vorteilhafte Ausgestaltungen sind Gegenstand der abhängigen Ansprüche.

Der erfindungsgemäße Elektroschrank ist zur Aufnahme von Elektroinstallationsgeräten ausgebildet und weist ein Gehäuse auf, in dem die Elektroinstallationsgeräte befestigbar sind. Weiterhin weist der Elektroschrank eine erste und eine zweite Türe auf, welche am Gehäuse angeordnet und zur manuellen Betätigung vorgesehen sind. Ferner ist ein Verbindungselement vorgesehen, welches zumindest an einer der Türen befestigt und derart ausgebildet ist, dass die erste Türe und die zweite Türe miteinander gekoppelt und gemeinsam betätigbar sind.

Hieraus ergibt sich zum einen der Vorteil, dass ein Bediener oder Elektroinstallateur beide Türen gemeinsam mit einem Handgriff öffnen kann, wodurch die Handhabungsfreundlichkeit verbessert wird. Zum anderen besteht für einen Hersteller derartiger Elektroschränke die Möglichkeit, für unterschiedliche Baugrößen von Elektroschränken dieselben Türen zu verwenden. Bei Elektroschränken mit mehreren Türen können diese je nach Marktanforderung oder Kundenwunsch mit Hilfe des Verbindungselements miteinander gekoppelt werden. Hierdurch können sowohl die Variantenvielfalt in der Produktion als auch die Anzahl an Ländervarianten deutlich reduziert werden.

In einer vorteilhaften Weiterbildung des Elektroschranks weist das Verbindungselement mit zumindest einer der Türen eine feste aber lösbare Verbindung auf.

Das Verbindungselement ist mit zumindest einer der beiden Türen fest aber lösbar verbunden, beispielsweise durch Aufstecken, Clipsen oder Verschrauben. Dadurch ist die Kopplung der Türen reversibel und bei Bedarf kann mit geringem Aufwand wieder entfernt werden. Mit der anderen Türe besteht eine Kopplung, die ebenfalls als feste aber lösbare Verbindung ausgebildet sein kann. Es ist jedoch ebenso möglich, das Verbindungselement mit der anderen Türe lediglich formschlüssig zu koppeln, beispielsweise mittels einer u-förmigen Aufnahme, welche die andere Türe in einem Randbereich formschlüssig umgreift. Dadurch wird die andere Türe beim betätigen der ersten Türe über das Verbindungselement mitbewegt.

In einer weiteren vorteilhaften Weiterbildung des Elektroschranks sind die Türen mittels eines zwischen den Türen und dem Gehäuse angeordneten Scharniers bewegbar, wobei die Kopplung der Türen durch eine gemeinsame Drehachse in dem Scharnier erfolgt.

Ein Scharnier stellt eine gängige Möglichkeit zur drehbeweglichen Verbindung zweier Elemente (hier einer Türe mit dem Gehäuse) um eine gemeinsame Drehachse dar. Die Kopplung der Türen über diese gemeinsame Drehachse stellt eine ästhetische und einfach zu realisierende Möglichkeit dar, die vor allem bei kleinen und leichten Türen einsetzbar ist.

In einer weiteren vorteilhaften Weiterbildung des Elektroschranks ist das Verbindungselement als Leiste ausgebildet, so dass die Kopplung der Türen mittels der Leiste, welche an den beiden Türen befestigt ist, erfolgt.

Eine weitere Möglichkeit zur Kopplung der Türen besteht in der Verwendung einer Leiste, welche an den beiden Türen befestigt (beispielsweise geklebt oder verschraubt) wird. Eine derartige Leiste kann beispielsweise auf der Vorderseite der Türen angebracht werden und als gemeinsame Griffleiste dienen. Vorteilhafter Weise wird eine derartige Leiste parallel zur Drehachse des Scharniers in einem Randbereich der Türen befestigt, der zum Bereich der Drehachse einen verhältnismäßig großen Abstand aufweist. In diesem Fall stellen sich aufgrund der Hebelwirkung günstigere Kraftverhältnisse beim Öffnen und Schließen der Türen ein. Weiterhin wird durch das Anbringen der Leiste die Stabilität der Türen deutlich erhöht. In einer weiteren vorteilhaften Weiterbildung des Elektroschranks ist zumindest eine dritte Türe an dem Gehäuse angeordnet, wobei mit Hilfe des Verbindungselements auch die dritte Türe koppelbar und gemeinsam mit der ersten und der zweiten Türe betätigbar ist.

Bei Elektroschränken, welche mehr als zwei Türen aufweisen, können mit Hilfe des Verbindungselements auch weitere Türen gekoppelt werden, so dass sie gemeinsam mit der ersten und der zweiten Türe betätigbar sind. Die Bedienbarkeit wird dadurch erheblich vereinfacht.

In einer weiteren vorteilhaften Weiterbildung des Elektroschranks ist zumindest eine weitere Türe am Gehäuse angeordnet, welche unabhängig vom Verbindungselement betätigbar ist.

Für bestimmte Anwendungsfälle kann es vorteilhaft sein, nicht alle Türen miteinander zu koppeln und gemeinsam zu betätigen, sondern zumindest eine der Türen derart zu gestalten, dass sie separat geöffnet und geschlossen werden kann. Dies ist beispielsweise der Fall, wenn einige der im Gehäuse des Elektroschranks angeordneten Elektroinstallationsgeräte nicht allgemein zugänglich sein sollen und die betreffende Türe, hinter der sich diese Elektroinstallationsgeräte befinden, abschließbar ausgeführt ist.

In einer weiteren vorteilhaften Weiterbildung ist der Elektroschrank als Schaltschrank oder Verteilerschrank ausgebildet.

Schalt- und Verteilerschränke stellen gängige Ausführungsformen des erfindungsgemäßen Elektroschranks dar. Ein Schaltschrank beherbergt die elektrischen und elektronischen Komponenten einer Anlage, beispielsweise einer Fertigungsanlage, oder einer einzelnen Fertigungseinrichtung, beispielsweise einer Maschine. Er dient dem Schutz der Geräte vor Umgebungseinflüssen, beispielsweise Staub oder Feuchtigkeit, sowie der Halterung und Strukturierung des Innenaufbaus. Bei einem Verteilerschrank handelt es sich um einen verschließbaren Kasten, umgangssprachlich auch Sicherungskasten genannt, in denen Sicherungs- und Schaltelemente - sogenannte Elektroinstallationsgeräte - zur Verteilung des elektrischen Stroms in Gebäuden untergebracht sind. Für beide Anwendungsfälle existiert eine Vielzahl an Anforderungen, die sich auch regional unterscheiden können. Entsprechend gibt es für derartige Schalt- und Verteilerschränke auch eine Vielzahl von Bauformen, um den unterschiedlichsten Anforderungen Rechnung zu tragen.

Das erfindungsgemäße Verbindungselement ist zum Koppeln mehrerer Türen eines Elektroschranks, welcher zur Aufnahme von Elektroinstallationsgeräten ausgebildet ist, vorgesehen, wobei das Verbindungselement mit zumindest zwei der mehreren Türen koppelbar ist, um die Türen gemeinsam zu betätigen.

Hinsichtlich der Vorteile des erfindungsgemäßen Verbindungselements wird auf die Ausführungen zu den Vorteilen des erfindungsgemäßen Elektroschranks mit einem derartigen Verbindungselement verwiesen.

Im Folgenden werden Ausführungsbeispiele des Elektroschranks unter Bezug auf die beigefügten Figuren näher erläutert. In den Figuren sind:
- Figur 1: eine schematische Darstellung eines ersten Ausfüh- rungsbeispiels des erfindungsgemäßen Elektro- schranks sowie des Verbindungselements,
- Figur 2: eine schematische Darstellung eines zweiten Ausfüh- rungsbeispiels des erfindungsgemäßen Elektro- schranks sowie des Verbindungselements.

In den verschiedenen Figuren der Zeichnung sind gleiche Teile stets mit dem gleichen Bezugszeichen versehen. Die Beschreibung gilt für alle Zeichnungsfiguren, in denen das entsprechende Teil ebenfalls zu erkennen ist.

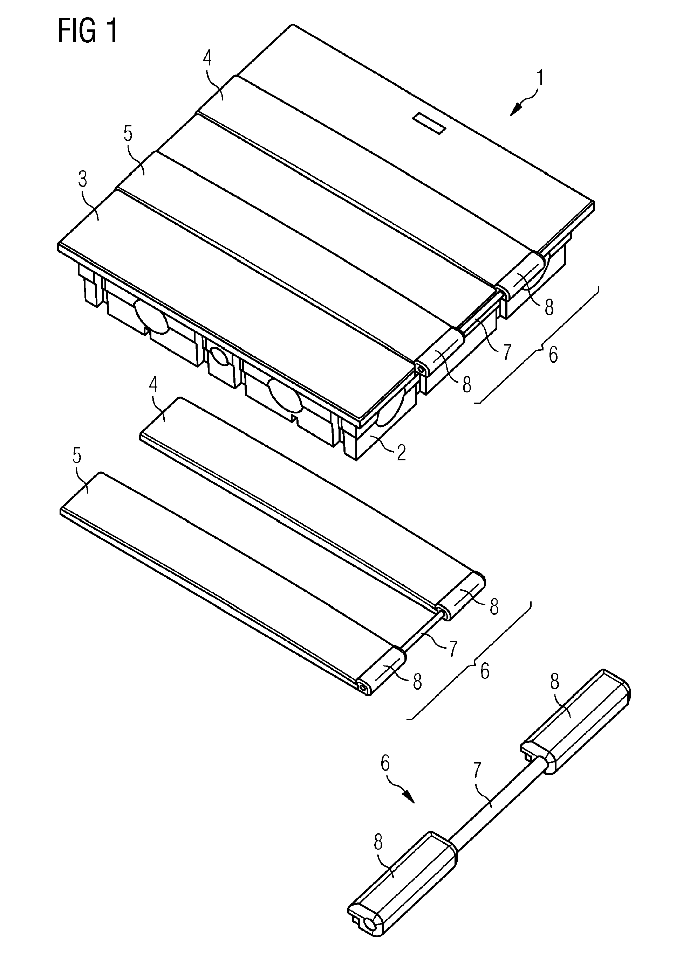

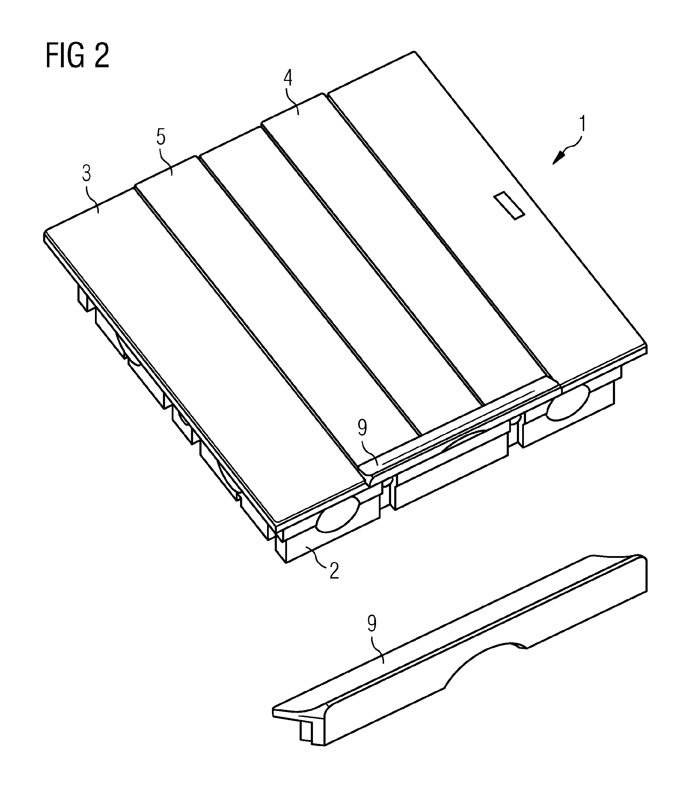

Die Figuren 1 und 2 zeigen ein erstes und ein zweites Ausführungsbeispiel des erfindungsgemäßen Elektroschranks 1 sowie des erfindungsgemäßen Verbindungselements 6, jeweils in einer schematischen Darstellung. Dabei ist der Elektroschrank 1 als Verteilerkasten in einer Unterputz-Ausführung dargestellt. Es ist jedoch ebenso möglich, den Elektroschrank 1 als Standgerät oder in einer Aufputz-Ausführung auszubilden. In beiden Ausführungsbeispielen besteht der Elektroschrank 1 im Wesentlichen aus einem Gehäuse 2 mit einem Deckel 3, in dem mehrere Öffnungen zum Bedienen von im Gehäuse 2 anordenbaren Elektroinstallationsgeräten vorgesehen sind. Diese Öffnungen sind aus Sicherheitsgründen mit Türen zu verschließen. In den in den Figuren 1 und 2 dargestellten Fällen handelt es sich jeweils um einen zweireihigen Elektroschrank, welcher zwei Türen - eine erste Türe 4 sowie eine zweite Türe 5 - aufweist.

Es sind aber auch Ausführungsformen mit mehr als zwei Reihen und gegebenenfalls auch mit mehr als zwei Türen möglich. Die Türen 4 und 5 weisen jeweils eine längliche, quaderförmige Form auf und sind an ihrem einen Ende, welches in den Figuren 1 und 2 links dargestellt ist, mit dem Gehäuse 2 über ein Drehgelenk, welches beispielsweise als Scharnier ausgeführt sein kann, verbunden.

Die beiden Türen 4 und 5 sind mit Hilfe eines Verbindungselements 6 miteinander gekoppelt, so dass sie gemeinsam bedienbar sind. In Figur 1 besteht dieses Verbindungselement 6 aus einem länglichen Steg 7, an dessen beiden Enden jeweils ein Schnappelement 8 befestigt ist. Die Schnappelemente 8 sind dabei so gestaltet, dass sie jeweils auf einen Randbereich der Türen 4 und 5 aufgeschnappt werden können und damit formschlüssig mit den Türen 4 und 5 verbunden sind. Vorteilhafter Weise ist der Randbereich am entgegengesetzten Ende der Türen 4 und 5, in den Figuren 1 und 2 rechts dargestellt, angeordnet.

In Figur 2 ist ein weiteres Ausführungsbeispiel dargestellt. Dabei ist das Verbindungselement 6 als Leiste 9 ausgeführt, welche fest mit den beiden Türen 4 und 5 verbunden ist. Dies kann beispielsweise durch Aufkleben, Verschrauben, Vernieten oder ebenso durch Clipsen erfolgen. Sowohl die Leiste 9 als auch der in Figur 1 dargestellte Steg 7 können als Betätigungselement zum manuellen Öffnen und Schließen der jeweils gekoppelten Türen 4 und 5 verwendet werden. Beide Ausführungsformen des Verbindungselements 6 sind prinzipiell auch zum Koppeln von mehr als zwei Türen geeignet. In diesem Fall sind die Verbindungselemente 6 jedoch in ihrer Länge an die jeweiligen Gegebenheiten anzupassen.

### Bezugszeichenliste

- 1: Elektroschrank
- 2: Gehäuse
- 3: Deckel
- 4: erste Türe
- 5: zweite Türe
- 6: Verbindungselement
- 7: Steg
- 8: Schnappelement
- 9: Leiste

## Patentansprüche

1. Elektroschrank (1), welcher zur Aufnahme von Elektroinstallationsgeräten ausgebildet ist, mit
- einem Gehäuse (2), in dem die Elektroinstallationsgeräte befestigbar sind,
- einer ersten Tür (4) und einer zweiten Tür (5), welche am Gehäuse (2) angeordnet und zur manuellen Betätigung vorgesehen sind,
**dadurch gekennzeichnet,**
**dass** ein Verbindungselement (6) vorgesehen ist, welches an zumindest einer der Türen (4, 5) befestigt und derart ausgebildet ist, dass die erste Türe (4) und die zweite Türe (5) miteinander gekoppelt und gemeinsam betätigbar sind.

2. Elektroschrank (1) nach Anspruch 1,
**dadurch gekennzeichnet,**
**dass** das Verbindungselement (6) mit zumindest einer der Türen (4, 5) eine feste aber lösbare Verbindung aufweist.

3. Elektroschrank (1) nach einem der Ansprüche 1 oder 2,
**dadurch gekennzeichnet,**
- **dass** die Türen (4, 5) mittels eines zwischen den Türen (4, 5) und dem Gehäuse (2) angeordneten Scharniers bewegbar sind,
- die Kopplung der Türen (4, 5) durch eine gemeinsame Drehachse in dem Scharnier erfolgt.

4. Elektroschrank (1) nach einem der Ansprüche 1 oder 2,
**dadurch gekennzeichnet,**
- **dass** das Verbindungselement (6) als Leiste ausgebildet ist, so dass die Kopplung der Türen (4, 5) mittels der Leiste, welche an den beiden Türen (4, 5) befestigt ist, erfolgt.

5. Elektroschrank (1) nach einem der Ansprüche 1 bis 4,
**dadurch gekennzeichnet,**
- **dass** zumindest eine dritte Türe am Gehäuse (2) angeordnet ist,
- **dass** mit Hilfe des Verbindungselements (6) auch die dritte Türe koppelbar und gemeinsam mit der ersten Türe (4) und der zweiten Türe (5) betätigbar ist.

6. Elektroschrank (1) nach einem der Ansprüche 1 bis 5,
**dadurch gekennzeichnet,**
**dass** zumindest eine weitere Türe am Gehäuse angeordnet ist, welche unabhängig vom Verbindungselement (6) betätigbar ist.

7. Elektroschrank (1) nach einem der Ansprüche 1 bis 6,
**dadurch gekennzeichnet,**
**dass** der Elektroschrank (1) als Schaltschrank oder Verteilerschrank ausgebildet ist.

8. Verbindungselement (6) zum Koppeln mehrerer Türen (4, 5) eines Elektroschranks (1), welcher zur Aufnahme von Elektroinstallationsgeräten ausgebildet ist, **dadurch gekennzeichnet,**
**dass** das Verbindungselement (6) mit zumindest zwei der mehreren Türen (4, 5) koppelbar ist, um die Türen (4, 5) gemeinsam zu betätigen.
